# EUROPÄISCHE PATENTANMELDUNG

(11) **EP 4 099 624 A1**
(43) Veröffentlichungstag der Anmeldung: **07.12.2022**
(21) Anmeldenummer: 22176107.5
(22) Anmeldetag: 30.05.2022
(51) Int. Cl.: H04L 9/40, G06F 21/64, G06F 21/60

(54) **ÜBERTRAGUNGSVERFAHREN**

(30) Priorität: 03.06.2021 DE 102021114409
(71) Anmelder: Bundesdruckerei GmbH, 10969 Berlin (DE)
(72) Erfinder: Schnjakin, Maxim, 10245 Berlin (DE)
(74) Vertreter: Glawe, Delfs, Moll

(57) **Zusammenfassung**

Offenbart werden unter anderem ein Verfahren (20) zum Betreiben einer Sendeeinrichtung (110), mit den Schritten: Bereitstellen eines Geheimnisses (S); Bereitstellen eines oder mehrerer Betriebsparameter (Par_B), wobei der oder die Betriebsparameter einen Anzahlparameter mit einer für eine Aufteilungsanzahl repräsentativen Information umfassen; Verschlüsseln (S210) einer Datenmenge (D) mittels des Geheimnisses (S); Aufteilen (S220) der verschlüsselten Datenmenge in eine Vielzahl von Teildatenpaketen, wobei die Vielzahl der Aufteilungsanzahl entspricht, zumindest teilweise abhängig von dem Anzahlparameter; und Senden (S240), von der Sendeeinrichtung (110) an eine Empfangseinrichtung (120), einer Gesamtdatenpaketmenge, die zumindest die Vielzahl von Teildatenpaketen umfasst. Ferner wird offenbart ein Verfahren (30) zum Betreiben einer Empfangseinrichtung (120), mit den Schritten: Bereitstellen eines Geheimnisses (S); Bereitstellen eines oder mehrerer Betriebsparameter (Par_B), wobei der oder die Betriebsparameter einen Anzahlparameter mit einer für eine Aufteilungsanzahl repräsentativen Information umfassen; Empfangen (S310) einer, insbesondere von einer Sendeeinrichtung gesendeten, Gesamtdatenpaketmenge, die eine Vielzahl von Teildatenpaketen umfasst, wobei die Vielzahl der Aufteilungsanzahl entspricht; Zusammensetzen (S330) der Vielzahl von Teildatenpaketen zu einer verschlüsselten Datenmenge, zumindest teilweise abhängig von dem Anzahlparameter; und Entschlüsseln (S340) der verschlüsselten Datenmenge mittels des Geheimnisses (S).

## Beschreibung

### Gebiet der Erfindung

Die vorliegende Erfindung betrifft ein Verfahren zum Betreiben einer Sendeeinrichtung und ein Verfahren zum Betreiben einer Empfangseinrichtung, ein entsprechendes Computerprogramm sowie eine Sendeeinrichtung, eine Empfangseinrichtung und ein Übertragungssystem.

### Hintergrund der Erfindung

Aus dem Stand der Technik ist bekannt, zur Absicherung einer Übertragung von Daten zwischen Sender und Empfänger eine Verbindung zu verwenden, bei der zwischen dem Sender und dem Empfänger ein sicherer Übertragungskanal (Tunnel) aufgebaut wird.

Die Verwendung eines solchen Übertragungsverfahrens hat sich jedoch als problematisch in unsicheren Netzen herausgestellt, bei denen es insbesondere bereits während des Aufbaus eines sicheren Übertragungskanals zu Angriffen kommen kann. Einzelne Übertragungskanäle können dabei angegriffen und kompromittiert werden, beispielsweise in Form einer Man-in-the-middle-Attacke.

### Allgemeine Beschreibung

Eine Aufgabe der vorliegenden Erfindung ist es deshalb, verbesserte Verfahren zum Betreiben einer Sendeeinrichtung und einer Empfangseinrichtung einzuführen.

Gelöst wird diese Aufgabe durch ein Verfahren zum Betreiben einer Sendeeinrichtung, durch ein Verfahren zum Betreiben einer Empfangseinrichtung, durch eine Sendeeinrichtung, durch eine Empfangseinrichtung, durch ein Übertragungssystem sowie durch ein Computerprogramm, die gemäß dem Hauptanspruch und den nebengeordneten Ansprüchen ausgebildet sind. Vorteilhafte Weiterbildungen sind Gegenstand der abhängigen Ansprüche.

Demnach betrifft die Erfindung ein Verfahren zum Betreiben einer Sendeeinrichtung, mit den Schritten: Bereitstellen eines Geheimnisses; Bereitstellen eines oder mehrerer Betriebsparameter, wobei der oder die Betriebsparameter einen Anzahlparameter mit einer für eine Aufteilungsanzahl repräsentativen Information umfassen; Verschlüsseln einer Datenmenge mittels des Geheimnisses; Aufteilen der verschlüsselten Datenmenge in eine Vielzahl von Teildatenpaketen, wobei die Vielzahl der Aufteilungsanzahl entspricht, zumindest teilweise abhängig von dem Anzahlparameter; und Senden, von der Sendeeinrichtung an eine Empfangseinrichtung, einer Gesamtdatenpaketmenge, die zumindest die Vielzahl von Teildatenpaketen umfasst.

Die Erfindung betrifft weiterhin ein Verfahren zum Betreiben einer Empfangseinrichtung, mit den Schritten: Bereitstellen eines Geheimnisses; Bereitstellen eines oder mehrerer Betriebsparameter, wobei der oder die Betriebsparameter einen Anzahlparameter mit einer für eine Aufteilungsanzahl repräsentativen Information umfassen; Empfangen, an der Empfangseinrichtung, einer Gesamtdatenpaketmenge, die eine Vielzahl von Teildatenpaketen umfasst, wobei die Vielzahl der Aufteilungsanzahl entspricht, von einer Sendeeinrichtung; Zusammensetzen der Vielzahl von Teildatenpaketen zu einer verschlüsselten Datenmenge, zumindest teilweise abhängig von dem Anzahlparameter; und Entschlüsseln der verschlüsselten Datenmenge mittels des Geheimnisses.

Die Erfindung beruht auf der Erkenntnis, dass die Übertragungssicherheit durch Aufteilen der zu übertragenden und verschlüsselten Gesamtdaten in einzelne Pakete und gesondertes Sende und Empfangen dieser Pakete, erhöht werden kann. Selbst bei Kenntnis des Schlüssels und eines oder mehrerer der Datenpakete hat ein Angreifer keinen Zugriff auf die gesamte Datenmenge. Sogar ein Zugriff auf nur denjenigen Teil der Gesamtdaten, der dem ihm bekannten Paket innewohnt, bleibt ihm verwehrt, da er ohne Kenntnis der übrigen Pakete trotz Kenntnis des Schlüssels die Gesamtdaten nicht - auch nicht teilweise - rekonstruieren kann. Hierzu müsste er nicht nur Zugriff auf sämtliche Datenpakete erhalten, sondern auch über Informationen über das Zusammensetzen der Datenpakete als auch über einen zur Verschlüsselung der Gesamtdaten verwendeten Schlüssel verfügen. Somit wird ein Abhören der Datenübertragung, insbesondere in Form einer Man-in-the-middle-Attacke, erheblich erschwert. Dies erhöht die Sicherheit der Datenübertragung auf signifikante Weise.

Die erfindungsgemäßen Sende- und Empfangseinrichtungen sind beispielsweise jeweils eine Servervorrichtung oder ein Client. Es kann vorgesehen sein, dass eine Servervorrichtung als Sendeeinrichtung und ein Client als Empfangseinrichtung fungiert oder umgekehrt. Auch ist möglich, dass sowohl Sende- als auch Empfangseinrichtung jeweils Servervorrichtungen oder Clients sind. Dabei ist unter einer Servervorrichtung ein einzelner Server als auch mehrere operativ miteinander verbundene Server wie beispielsweise eine Servercloud zu verstehen. Ein Client ist beispielsweise ein Benutzerendgerät, zum Beispiel ein mobiles Kommunikationsgerät oder ein Computer.

Die Sende- und Empfangseinrichtungen weisen zumindest eine drahtlose und/oder drahtgebundene Kommunikationsschnittstelle auf. Mittels dieser Kommunikationsschnittstelle kann beispielsweise über einen drahtlosen und/oder drahtgebundenen Kommunikationskanal ein Senden und/oder Empfangen, insbesondere einer Gesamtdatenpaketmenge, erfolgen. Unter einem Kommunikationskanal soll ein Kanal gemäß einer Kommunikationstechnik verstanden werden, über den zumindest ein Datenpaket der Gesamtdatenpaketmenge gesendet und empfangen werden kann. Beispielsweise umfassen die Sende- und Empfangseinrichtungen mehrere Kommunikationsschnittstellen, die jeweils über unterschiedliche Kommunikationskanäle senden und/oder empfangen können. Beispielsweise sind die Kommunikationsschnittstellen eingerichtet, auf mehreren, vorzugsweise unterschiedlichen, Kommunikationskanälen sukzessive oder parallel zu senden bzw. zu empfangen. Bei dem Kommunikationskanal kann es sich um einen zumindest teilweise gesicherten Kommunikationskanal handeln. Beispielhafte Kommunikationskanäle sind Funkkanäle (dem Fachmann z.B. unter den Akronymen RFID, NFC, Bluetooth oder WLAN bekannt), mobile Datenverbindungen (dem Fachmann z.B. unter den Akronymen GSM, UMTS oder LTE bekannt) oder drahtgebundene Kommunikationskanäle, die dem Fachmann zum Beispiel als Local Area Network oder als ein Bus-System bekannt sind (z.B. CAN-Bus oder USB).

Die erfindungsgemäße Empfangseinrichtung kann eingerichtet sein, ein Datenpaket zu empfangen, das von der erfindungsgemäßen Sendeeinrichtung gesendet worden ist, zum Beispiel die Gesamtdatenpaketmenge. Wird ein Datenpaket von einer erfindungsgemäßen Sendeeinrichtung gesendet und von einer erfindungsgemäßen Empfangseinrichtung empfangen, so handelt es sich um eine Übertragung des Datenpakets. Die Datenträger der Sende- und Empfangseinrichtung können in der jeweiligen Einrichtung integriert sein.

Bei dem Geheimnis handelt es sich um eine geheime Kennung. Beispielsweise ist sowohl der Sendeeinrichtung als auch der Empfangseinrichtung jeweils ein Geheimnis zugeordnet. Zum Beispiel ist dies ein Schlüssel oder eine Schlüsselkombination. Beispielsweise sind die in den Sende- und Empfangseinrichtungen bereitgestellten Geheimnisse nur einer Sende- und nur einer Empfangseinrichtung bekannt. Das in der Empfangseinrichtung bereitgestellte Geheimnis soll so beschaffen sein, dass es zum Entschlüsseln einer mit dem in der Sendeeinrichtung bereitgestellten Geheimnis verschlüsselten Datenmenge geeignet ist. Bei den in den Sende- und Empfangseinrichtungen bereitgestellten Geheimnissen kann es sich jeweils um das gleiche Geheimnis handeln, zum Beispiel um einen gemeinsamen (z.B. symmetrischen) Schlüssel. Es kann auch vorgesehen sein, dass die bereitgestellten Geheimnisse in der Sende- und Empfangseinrichtung unterschiedlich sind, zum Beispiel in Form von Teilen einer Schlüsselkombination, zum Beispiel von jeweils einem Teil eines (z.B. asymmetrischen) Schlüsselpaars.

Der oder die Betriebsparameter umfassen Informationen, die für das Durchführen der erfindungsgemäßen Verfahren erforderlich sind. Der oder die in der Empfangseinrichtung bereitgestellten Betriebsparameter umfassen dabei insbesondere Informationen, mittels derer das Zusammensetzen der Vielzahl von Teildatenpaketen, in die die verschlüsselte Datenmenge in der Sendeeinrichtung mittels der von den in der Sendeeinrichtung bereitgestellten Betriebsparametern aufgeteilt worden ist, ermöglicht wird. Die Betriebsparameter umfassen dabei zumindest einen Anzahlparameter mit einer für eine Aufteilungsanzahl repräsentativen Information. Optional und können die Betriebsparameter weitere Parameter, beispielsweise Informationen für ein fehlerkorrigierendes Verfahren, umfassen. Beispielshaft können die in den Sende- und Empfangseinrichtungen bereitgestellten Betriebsparameter gleich sein, was bedeutet, dass die von Ihnen repräsentierten Informationen gleich sind.

Die in der Sendeeinrichtung bereitgestellten Betriebsparameter umfassen einen Anzahlparameter, der vorgibt, in wie viele Teildatenpakete die verschlüsselte Datenmenge aufgeteilt werden soll, also wie groß die Vielzahl von Teildatenpaketen in der Gesamtdatenpaketmenge ist. Entsprechend kann in der Empfangseinrichtung zumindest teilweise abhängig von dem Anzahlparameter die verschlüsselte Datenmenge aus der Vielzahl von Teildatenpaketen zusammengesetzt werden. Beispielsweise ist anhand des Anzahlparameters die Anzahl die Anzahl der zusammenzusetzenden Teildatenpakete bekannt. Darüber hinaus ist auch denkbar, dass das Aufteilen oder das Zusammensetzen anhand weiterer Betriebsparameter erfolgt, zum Beispiel kann ein Betriebsparameter, beispielsweise wenn er für eine Reihenfolge von Teildatenpaketen repräsentative Informationen umfasst, vorgeben, in welcher Reihenfolge die Teildatenpaketen zusammenzusetzen sind, oder wenn er entsprechend repräsentative Informationen umfasst, die Größe der jeweiligen Teildatenpakete vorgeben.

Unter einer "Datenmenge" soll eine Menge von Daten, die die Nutzdaten, aber auch optional weitere Daten (z.B. Header und/oder Trailer) umfassen können, und unter einem "Datenpaket" eine geschlossene Dateneinheit, die eine wohldefinierte Länge und Form aufweist, verstanden werden. Die Datenmenge soll sowohl in eine Vielzahl von Teildatenpaketen aufteilbar sein als auch aus einer Vielzahl von Teildatenpaketen zusammensetzbar sein. Das Zusammensetzen kann zum Beispiel sukzessive erfolgen, sodass die Datenpakete der Gesamtdatenpaketmenge nacheinander gemäß einer vorgesehenen Folge (z.B. unter Berücksichtigung entsprechender von den Betriebsparametern umfassten Informationen) zusammengefügt werden. Bei dem Zusammensetzen kann beispielsweise ferner vorgesehen sein, dass für jedes Datenpaket der Gesamtdatenpaketmenge geprüft wird, ob es Teil der Vielzahl von Teildatenpakete ist.

Bei der Gesamtdatenpaketmenge handelt es sich um eine Mehrzahl von Datenpaketen, die zumindest die Teildatenpakete umfasst. Die Gesamtdatenpaketmenge kann zusätzlich ein oder mehrere von der Sendeeinrichtung zumindest teilweise abhängig von einem Redundanzparameter erzeugte Redundanzdatenpakete umfassen. Dann umfassen der oder die Betriebsparameter den Redundanzparameter mit einer für eine Redundanzanzahl repräsentativen Information und die Anzahl der Redundanzdatenpakete entspricht der Redundanzanzahl. Zusätzlich gehen dabei dem Zusammensetzen der Vielzahl von Teildatenpaketen zu einer Datenmenge die Schritte Identifizieren der Redundanzdatenpakete der Gesamtdatenpaketmenge zumindest mittels des Redundanzparameters und Verwerfen der Redundanzdatenpakete voraus.

Bei den Redundanzdatenpaketen handelt es sich um Datenpakete, die im Gegensatz zu den Teildatenpaketen keine Daten der Datenmenge, zum Beispiel Nutzdaten, tragen, und die dementsprechend nicht für das Zusammensetzen der Vielzahl der Teildatenpakete zur verschlüsselten Datenmenge benötigt werden. Die Redundanzdatenpakete können zum Beispiel nach dem Aufteilen der verschlüsselten Datenmenge in eine Vielzahl von Teildatenpaketen und beispielsweise in einer solchen Anzahl erzeugt werden, die durch den Redundanzparameter in Form der Redundanzanzahl festgelegt ist. Dies stellt eine beispielhafte Abhängigkeit des Erzeugens von dem Redundanzparameter dar. Die Redundanzdatenpakete können den Teildatenpaketen beispielsweise derart ähneln, dass nur unter Berücksichtigung von im Redundanzparameter umfassten Informationen, zum Beispiel hinsichtlich der Anzahl, der Beschaffenheit oder weiterer Eigenschaften der Redundanzdatenpakete, eine Unterscheidung der Redundanzdatenpakete von den Teildatenpaketen möglich ist. Beispielsweise kann jeweils eine Redundanzdatenmenge erzeugt und, zum Beispiel anhand eines von dem Redundanzparameter vorgegebenen Schemas, mit einem Flag versehen werden, das die Beschaffenheit der Redundanzdatenpakete als nicht zur Vielzahl von Teildatenpaketen, sondern der Anzahl der Redundanzdatenpakete zugehörig kennzeichnet. Zusätzlich können die einzelnen Redundanzdatenmengen mitsamt Flag mittels des Geheimnisses S verschlüsselt werden. So ist für das Identifizieren der Redundanzdatenpakete die Kenntnis des durch den Redundanzparameter vorgegebenen Schemas und/oder des Geheimnisses S erforderlich.

Das Vorhandensein von Redundanzdatenpaketen in der Gesamtdatenpaketmenge erschwert einen missbräuchlichen Angriff auf zweierlei Art und Weise: Zum einen wird die Gesamtdatenpaketmenge um die Redundanzanzahl vergrößert, wodurch ein Angreifer bereits grundsätzlich eine größere Zahl an Gesamtdatenpaketen abfangen muss. Zum anderen kann der Angreifer ohne Kenntnis des Redundanzparameters die Redundanzdatenpakete nicht von den Teildatenpaketen unterscheiden.

Gemäß einer Ausführungsform wird zumindest ein erster Teil der Gesamtdatenpaketmenge auf zumindest einem ersten Kommunikationskanal und zumindest ein zweiter Teil der Gesamtdatenpaketmenge auf zumindest einem zweiten Kommunikationskanal gesendet, und zumindest der erste Teil der Gesamtdatenpaketmenge auf dem ersten Kommunikationskanal und zumindest der zweite Teil der Gesamtdatenpaketmenge auf zumindest dem zweiten Kommunikationskanal empfangen.

Wird über zumindest einen ersten und einen zweiten Kommunikationskanal gesendet bzw. empfangen, so kann die Sicherheit der Übertragung weiter erhöht werden, da ein missbräuchlicher Angriff auf mehrere Kommunikationskanäle gerichtet sein müsste, was beispielsweise ein umfangreichere Hardwareausstattung, zum Beispiel in Form von Kommunikationsschnittstellen, erfordert.

Mit Vorteil umfassen die Betriebsparameter einen Kanalparameter mit einer Information über den ersten und den zweiten Kommunikationskanal, wobei das Senden und das Empfangen zumindest des ersten Teils der Gesamtdatenpaketmenge auf dem ersten Kommunikationskanal und zumindest des zweiten Teils der Gesamtdatenpaketmenge auf zumindest dem zweiten Kommunikationskanal zumindest teilweise abhängig von dem Kanalparameter ist.

Anhand der von einem solchen Kanalparameter umfassten Information kann beispielsweise auf Seiten der Empfangseinrichtung bekannt sein, auf welchen Kommunikationskanälen die Sendeeinrichtung sendet. Beispielsweise erfolgt das Senden zu verschiedenen Zeiten auf spezifischen Kommunikationskanälen, sodass die Empfangseinrichtung jeweils zeitabhängig auf dem spezifischen Kommunikationskanal zielgerichtet empfangen kann.

Zum Beispiel können in einer bestimmten Zeit nicht benötigte Kommunikationsschnittstellen abgeschaltet werden, was ein besonders energieeffizientes Senden und Empfangen bei Verwendung mehrerer Kommunikationskanäle ermöglicht.

Zusätzlich können der erste und/oder der zweite Kommunikationskanal als ein Funkkanal oder als eine mobile Datenverbindung ausgebildet sein. Alternativ können auch drahtgebundene Kommunikationskanäle vorgesehen sein.

Vorzugsweise umfasst das Bereitstellen des Geheimnisses ein Verschlüsseln des Geheimnisses und Senden des verschlüsselten Geheimnisses, oder ein Empfangen des verschlüsselten Geheimnisses und Entschlüsseln des Geheimnisses.

Zum Verschlüsseln und zum Entschlüsseln des Geheimnisses verfügen die Sende- und Empfangseinrichtung dann jeweils über geeignete Schlüssel, beispielsweise Schlüssel eines symmetrischen oder eines asymmetrischen Schlüsselpaares. Es kann vorgesehen sein, dass das Geheimnis mit einem in der das Geheimnis erzeugenden Einrichtung vorhandenen privaten Schlüssel eines asymmetrischen Schlüsselpaares verschlüsselt und mit einem in der das Geheimnis empfangenden Einrichtung vorhandenen öffentlichen Schlüssel des asymmetrischen Schlüsselpaares entschlüsselt wird. Beispielsweise wird das Geheimnis von der Sende- oder von der Empfangseinrichtung erzeugt, verschlüsselt und an die jeweils andere Einrichtung übermittelt (z.B. in Form eines Anhangs an jedem der Datenpakete der Gesamtdatenpaketmenge) und dort entschlüsselt. Das Übermitteln umfasst beispielsweise ein Senden von der Sende- oder Empfangseinrichtung und ein Empfangen an der jeweils anderen Einrichtung. In diesem Sinne kann das Geheimnis nur von einer der Einrichtungen erzeugt und der anderen Einrichtung bekannt gemacht werden.

Dies ist vorteilhaft, da so nur eine der Einrichtungen über Mittel zur Schlüsselerzeugung verfügen muss.

In einer bevorzugten Ausführungsform umfasst das Bereitstellen des oder der Betriebsparameter ein Verschlüsseln der Betriebsparameter und Senden der verschlüsselten Betriebsparameter, oder ein Empfangen der verschlüsselten Betriebsparameter und Entschlüsseln der Betriebsparameter.

Das Bereitstellen des oder der Betriebsparameter kann analog zum oben beschriebenen Bereitstellen des Geheimnisses erfolgen.

Im Falle der Betriebsparameter ist dabei besonders vorteilhaft, dass diese bei einer Erzeugung in nur einer der Sende- und Empfangseinrichtung und Übermittlung an die jeweils andere Einrichtung keine Abweichungen voneinander aufweisen und somit ein Abgleich der Betriebsparameter besonders einfach möglich ist.

Das Geheimnis kann gemäß einer weiteren Ausführungsform einen symmetrischen Schlüssel umfassen.

Hierbei kann zum Beispiel vorgesehen sein, dass Sende- und Empfangseinrichtung denselben Schlüssel, zum Beispiel als einziges Geheimnis, verwenden. Alternativ können die Schlüssel nicht identisch, aber leicht auseinander berechenbar sein.

Gemäß einer alternativen Ausführungsform kann das Geheimnis einen privaten Schlüssel und/oder einen öffentlichen Schlüssel eines asymmetrischen Schlüsselpaares umfassen. Beispielhaft kann dann zumindest der private Schlüssel in der Sendeeinrichtung und zumindest der öffentliche Schlüssel in der Empfangseinrichtung bereitgestellt werden.

Bei dem asymmetrischen Schlüsselpaar handelt es sich zum Beispiel um Schlüssel eines Public-Key-Verschlüsselungsverfahrens. Das asymmetrische Schlüsselpaar kann zum Beispiel das einziges Geheimnis bilden. Beispielsweise kann zum Bereitstellen des Geheimnisses in Sende- und Empfangseinrichtung ein Diffie-Hellman-Schlüsselaustausch zwischen den Einrichtungen vorgesehen sein.

Bei der Verwendung eines solchen Public-Key-Verschlüsselungsverfahrens unterliegt der Kommunikationskanal keinen Beschränkungen hinsichtlich der Abhörbarkeit. Der Kanal muss nicht abhörsicher ausgestaltet sein, was einen weniger aufwändigen Betrieb ermöglicht.

In einer weiteren Ausführungsform umfassen der oder die Betriebsparameter einen Fehlerkorrekturparameter mit einer Information über das Fehlerkorrekturverfahren, wobei das Zusammensetzen der Vielzahl von Teildatenpaketen das zumindest teilweise von dem Fehlerkorrekturparameter abhängige Anwenden eines Fehlerkorrekturverfahrens zur Erstellung der verschlüsselten Datenmenge umfasst. Vorzugsweise kann das Fehlerkorrekturverfahren eine Cauchy-Reed-Solomon-Fehlerkorrektur sein. Mittels eines solchen Anwendens eines Fehlerkorrekturverfahrens beim Zusammensetzen der Vielzahl von Teildatenpaketen können Übertragungs- oder Speicherfehler erkannt und korrigiert werden. Hierbei geschieht das Anwenden beispielsweise insofern abhängig von dem Fehlerkorrekturparameter und der ihm innewohnenden Information, als dass diese den bei dem Fehlerkorrekturverfahren zu verwendenden Algorithmus vorgibt.

Dabei ist eine Cauchy-Reed-Solomon-Fehlerkorrektur von Vorteil hinsichtlich Korrekturfähigkeit und dabei benötigter Rechenleistung.

Gemäß einer Ausführungsform sind der oder die in der Sendeeinrichtung bereitgestellten Betriebsparameter und der oder die in der Empfangseinrichtung bereitgestellten Betriebsparameter zumindest teilweise gleich.

Zum Beispiel werden an beiden Einrichtungen jeweils solche Betriebsparameter bereitgestellt, die dieselben Informationen umfassen. Beispielsweise verfügen die Einrichtungen nicht nur über die für ihren jeweiligen Betrieb als Sende- oder Empfangseinrichtung benötigten Betriebsparameter, sondern über sämtliche, auch an der oder den anderen jeweiligen Einrichtungen bereitgestellten Betriebsparameter.

Dies ermöglicht eine bidirektionale Datenübertragung, bei der die Sendeeinrichtung auch als Empfangseinrichtung fungieren kann und umgekehrt.

Die Erfindung ist ebenso auf eine Sendeeinrichtung mit einem Prozessor, einer Sendeeinheit und einem computerlesbaren Datenträger gerichtet, wobei in dem Datenträger Instruktionen gespeichert sind, die bei Ausführung durch den Prozessor die Durchführung des erfindungsgemäßen Verfahrens zum Betreiben einer Sendeeinrichtung bewirken.

Darüber hinaus ist die Erfindung auf eine Empfangseinrichtung mit einem Prozessor, einer Empfangseinheit, und einem computerlesbaren Datenträger gerichtet, wobei in dem Datenträger Instruktionen gespeichert sind, die bei Ausführung durch den Prozessor die Durchführung des erfindungsgemäßen Verfahrens zum Betreiben einer Empfangseinrichtung bewirken.

Die Erfindung betrifft ebenso ein Übertragungssystem umfassend eine erfindungsgemäße Sendeeinrichtung und eine erfindungsgemäße Empfangseinrichtung.

Das Übertragungssystem kann dabei beispielsweise auch eine erfindungsgemäße Sendeeinrichtung und mehrere erfindungsgemäße Empfangseinrichtungen aufweisen. Dann wird die Gesamtdatenpaketmenge von einer Mehrzahl von Empfangseinrichtungen empfangen. Es kann vorgesehen sein, dass von dieser Mehrzahl von Empfangseinrichtungen zumindest zwei Empfangsgeräte gemäß dem erfindungsgemäßen Verfahren zum Betreiben einer Empfangseinrichtung betrieben werden.

Schließlich umfasst die Erfindung ein Computerprogramm mit Programmanweisungen, einen Prozessor zur Ausführung und/oder Steuerung des erfindungsgemäßen Verfahrens zum Betreiben einer Sendeeinrichtung oder des erfindungsgemäßen Verfahrens zum Betreiben einer Empfangseinrichtung zu veranlassen, wenn das Computerprogramm auf dem Prozessor ausgeführt wird.

Das erfindungsgemäße Computerprogramm ist beispielsweise auf einem computerlesbaren Datenträger gespeichert.

Die voranstehend beschriebenen Ausführungsformen und Ausgestaltungen sind lediglich als beispielhaft zu verstehen und sollen die vorliegende Erfindung in keiner Weise einschränken.

### Kurze Beschreibung der Figuren

Die Erfindung wird nachfolgend unter Bezugnahme auf die beigefügten Zeichnungen anhand von vorteilhaften Ausführungsformen beispielhaft näher erläutert. Es zeigen:
- Fig. 1: eine schematische Darstellung eines Systems umfassend eine Sende- und eine Empfangseinrichtung gemäß einer beispielhaften Ausführungsform der Erfindung; und
- Fig. 2: ein schematisches Flussdiagramm eines Verfahrens gemäß einer beispielhaften Ausführungsform der Erfindung.

### Detaillierte Beschreibung

Die Figuren zeigen beispielhafte Ausführungsformen von Antriebseinheitensystemen, selbstfahrenden Antriebseinheiten und Lagervorrichtungen. Dabei verweisen gleiche Bezugszeichen auf gleiche oder gleichartige Elemente der Ausführungsformen.

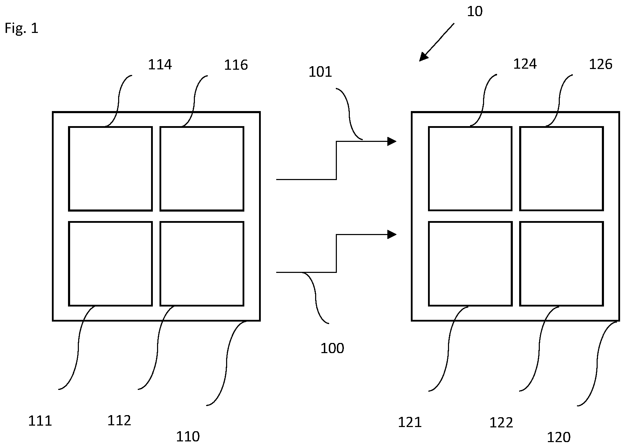

In Fig. 1 ist eine schematische Darstellung eines Übertragungssystems 10 umfassend eine Sendeeinrichtung 110 und eine Empfangseinrichtung 120 gemäß einer beispielhaften Ausführungsform der Erfindung gezeigt.

Die Sendeeinrichtung 110 umfasst eine erste Kommunikationsschnittstelle 111, eine zweite Kommunikationsschnittstelle 112, einen Prozessor 114 und einen Speicher 116. In ähnlicher Weise umfasst die Empfangseinrichtung eine erste Kommunikationsschnittstelle 121, eine zweite Kommunikationsschnittstelle 122, einen Prozessor 124 und einen Speicher 126. Die Sendeeinrichtung 110 und die Empfangseinrichtung sind dazu ausgebildet, mittels ihrer ersten Kommunikationsschnittstellen 111, 121 über einen ersten Kommunikationskanal 100 und mittels ihrer zweiten Kommunikationsschnittstellen 112, 122 über einen zweiten Kommunikationskanal 101 zu kommunizieren. Im Rahmen einer solchen Kommunikation kann eine Gesamtdatenpaketmenge von der Sendeeinrichtung 110 gesendet und von der Empfangseinrichtung 120 empfangen, also übertragen, werden. Ein erster Teil der Gesamtdatenpaketmenge kann dabei auf dem ersten Kommunikationskanal und ein zweiter Teil der Gesamtdatenpaketmenge auf dem zweiten Kommunikationskanal übertragen werden. Beispielsweise findet das Übertragen anhand von in einem Kanalparameter der Betriebsparameter umfassten Information statt. Bei dem ersten Kommunikationskanal 100 soll es sich beispielhaft um eine mobile Datenverbindung gemäß dem LTE-Standard und bei dem zweiten Kommunikationskanal 101 um einen WLAN-Funkkanal gemäß einem Standard der IEEE-802.11-Familie handeln.

Die Ausgestaltung der Funktionsmodule (Prozessor, Kommunikationsschnittstelle, Speicher) der Einrichtungen 110, 120 wird im Folgenden nicht genauer beschrieben, da diese im Bereich des fachmännischen Könnens liegt. So ist es dem Fachmann beispielsweise ohne Weiteres geläufig, bei der Gestaltung des Speichers 116, 126 auf die üblicherweise verwendeten Speicherarten (RAM, ROM, EEPROM) zurückzugreifen.

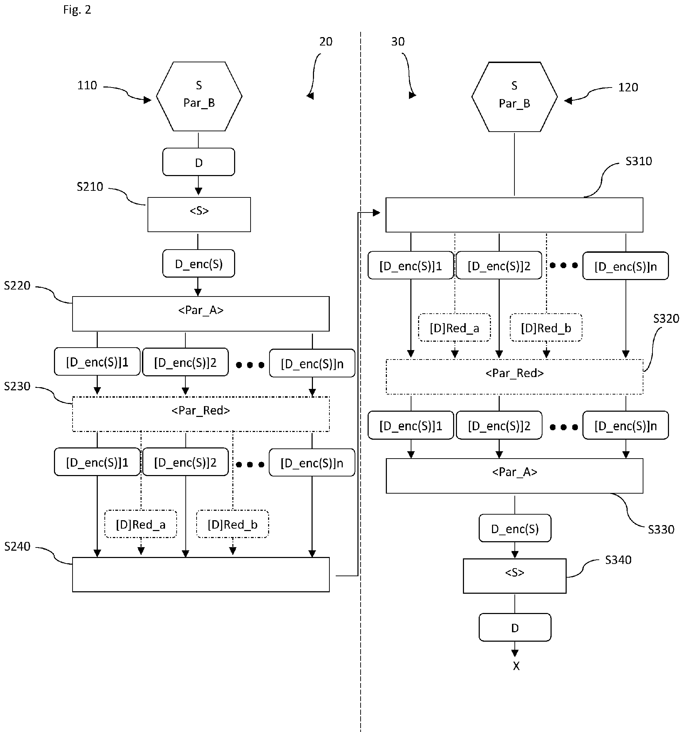

Fig. 2 veranschaulicht den Ablauf des erfindungsgemäßen Vorgehens. Der Ablaufteil 20 stellt ein beispielhaftes erfindungsgemäßes Verfahren zum Betreiben einer Sendeeinrichtung dar und wird in der Sendeeinrichtung 110 durchgeführt. Entsprechend stellt der Ablaufteil 30 ein beispielhaftes erfindungsgemäßes Verfahren zum Betreiben einer Empfangseinrichtung dar und wird in der Empfangseinrichtung 120 durchgeführt. Wie in Fig. 2 ersichtlich, sind beide Ablaufteile im Rahmen einer Übertragung einer Gesamtdatenpaketmenge von der Sendeeinrichtung 110 an die Empfangseinrichtung 120 technisch miteinander verknüpft.

Die Darstellung des Verfahrensablaufs der Fig. 2 beginnt zu einem Zeitpunkt, an dem in beiden Einrichtungen 110, 120 sowohl ein Schlüssel S als beispielhaftem Geheimnis als auch die Betriebsparameter Par_B bereitgestellt sind, die beispielsweise im jeweiligen Speicher 116, 126 der Einrichtungen hinterlegt sind. Alternativ können der Schlüssel S und die Betriebsparameter Par_B auch vor Beginn des Verfahrens, zum Beispiel über den Kommunikationskanal 100 und/oder den Kommunikationskanal 101, ausgetauscht werden. Die Vornahme eines solchen Austauschs, gegebenenfalls in gesicherter Form, kann in einer dem Fachmann an sich bekannten Art und Weise erfolgen. Insbesondere kann eine Verbindung über einen gesicherter Kommunikationskanal wie bekannt erfolgen, unter Aushandlung eines gemeinsamen symmetrischen Sitzungsschlüssels ausgehend von jeweiligen asymmetrischen Schlüsselpaaren.

Im Beispiel der Fig. 2 sind die in der Sendeeinrichtung 110 und die in der Empfangseinrichtung 120 vorhandenen Betriebsparameter Par_B gleich und umfassen sowohl einen Anzahlparameter Par_A als auch einen Redundanzparameter Par_Red.

Beispielhaft kann die Datenmenge D zumindest temporär in der Sendeeinrichtung 110 verfügbar und zum Beispiel auf dem Speicher 116 gespeichert sein.

In einem Schritt S210 verschlüsselt die Sendeeinrichtung 110 anhand des in der Sendeeinrichtung 110 hinterlegten Schlüssels S die Datenmenge D und erzeugt dadurch die verschlüsselte Datenmenge D_enc(S).

In Schritt S220 teilt die Sendeeinrichtung 110 die verschlüsselte Datenmenge D_enc(s) in eine Vielzahl von Teildatenpaketen [D_enc(S)]1, [D_enc(S)]2 bis [D_enc(S)]n. Dies erfolgt abhängig von einem Anzahlparameter Par_A, der eine für die Aufteilungsanzahl repräsentative Information umfasst wodurch er in der Lage ist, die Anzahl n der Teildatenpakete [D_enc(S)] vorzugeben, in die die verschlüsselte Datenmenge D_enc(s) aufgeteilt wird. Es ist aber auch denkbar, dass das Aufteilen in Schritt S220 noch von anderen Parametern abhängig ist, die von den Betriebsparametern Par_B umfasst sind, hinsichtlich der Reihenfolge und/oder der jeweiligen Größe der Teildatenpakete.

Die Schritte S230 und S320 sind optional, jedoch setzt die Vornahme des Schritts S230 auch die Vornahme des Schritts 320 voraus.

In Schritt S230 werden zusätzlich zwei Redundanzdatenpakete [D]Red_a und [D]Red_b erzeugt, wobei die Redundanzdatenpakete mit einem von einem Redundanzparameter Par_Red vorgegebenen, gemäß einem Schema des Redundanzparameters gesetzten Flag versehen werden, das die Beschaffenheit der Redundanzdatenpakete als nicht zur Vielzahl von Teildatenpaketen, sondern der Anzahl der Redundanzdatenpakete zugehörig kennzeichnet. Somit erfolgt dieser Schritt S230 abhängig vom Redundanzparameter Par_Red, der hier beispielhaft die Anzahl der zu erzeugenden Redundanzdatenpakete und deren Beschaffenheit vorgibt. Im vorliegenden Beispiel ist die Redundanzanzahl 2. Insbesondere ist die Beschaffenheit der Redundanzdatenpakete [D]Red als zur Anzahl der Redundanzdatenpakete zugehörig anhand des jeweils gesetzten Flags nur bei Kenntnis des Schemas des Redundanzparameters, mithin nur bei Kenntnis des Redundanzparameters, ersichtlich.

Die n Teildatenpakete [D_enc(S)] und die zwei optionalen Redundanzdatenpakete [D]Red_a und [D]Red_b sind Teil der Gesamtdatenpaketmenge, die in Schritt S240 von der Kommunikationsschnittstelle 116 der Sendeeinrichtung 110 gesendet wird. In Schritt S310 wird die Gesamtdatenpaketmenge an der Kommunikationsschnittstelle 126 der Empfangseinrichtung 120, empfangen. Die Gesamtdatenpaketmenge wird also von der Sendeeinrichtung 110 an die Empfangseinrichtung 120 übertragen.

Ist der optionale Schritt S230 vorgenommen worden, so werden vor dem Schritt S330 in einem zusätzlichen Schritt S320 die Redundanzdatenpakete [D]Red_a und [D]Red_b identifiziert und verworfen. Das Identifizieren erfolgt dabei abhängig von dem Redundanzparameter Par_Red, wobei die die Redundanzdatenpakete anhand der jeweils nach den Vorgaben des Redundanzparameters gesetzten Flags identifiziert werden.

In Schritt S330 erfolgt das Zusammensetzen der n Teildatenpakete [D_enc(S)] abhängig von den Betriebsparametern im Form des Anzahlparameters, der vorgibt, aus wie vielen Teildatenpaketen [D_enc(S)] die verschlüsselte Datenmenge D_enc(s) zusammenzusetzen ist. Beispielsweise können die Betriebsparameter zusätzlich vorgeben, in welcher Reihenfolge die Teildatenpaketen [D_enc(S)] zusammenzusetzen sind, oder welche Größe sie jeweils aufweisen.

Die verschlüsselte Datenmenge D_enc(S) wird schließlich in Schritt S340 mittels des Schlüssels S entschlüsselt. Hierdurch wird die Datenmenge D erhalten, die zum Beispiel an eine höhere Anwendungsebene übergeben werden kann.

Die in dieser Spezifikation beschriebenen Ausführungsformen der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion der Ausführungsform unerlässlich oder wesentlich ist.

## Patentansprüche

1. Verfahren (20) zum Betreiben einer Sendeeinrichtung (110), mit den folgenden Schritten:
Bereitstellen eines Geheimnisses (S);
Bereitstellen eines oder mehrerer Betriebsparameter (Par_B), wobei der oder die Betriebsparameter einen Anzahlparameter mit einer für eine Aufteilungsanzahl repräsentativen Information umfassen;
Verschlüsseln (S210) einer Datenmenge (D) mittels des Geheimnisses (S);
Aufteilen (S220) der verschlüsselten Datenmenge in eine Vielzahl von Teildatenpaketen, wobei die Vielzahl der Aufteilungsanzahl entspricht, zumindest teilweise abhängig von dem Anzahlparameter; und
Senden (S240), von der Sendeeinrichtung (110) an eine Empfangseinrichtung (120), einer Gesamtdatenpaketmenge, die zumindest die Vielzahl von Teildatenpaketen umfasst.

2. Verfahren (30) zum Betreiben einer Empfangseinrichtung (120), mit den folgenden Schritten:
Bereitstellen eines Geheimnisses (S);
Bereitstellen eines oder mehrerer Betriebsparameter (Par_B), wobei der oder die Betriebsparameter einen Anzahlparameter mit einer für eine Aufteilungsanzahl repräsentativen Information umfassen;
Empfangen (S310), an der Empfangseinrichtung (120), einer Gesamtdatenpaketmenge, die eine Vielzahl von Teildatenpaketen umfasst, wobei die Vielzahl der Aufteilungsanzahl entspricht, von einer Sendeeinrichtung (110);
Zusammensetzen (S330) der Vielzahl von Teildatenpaketen zu einer verschlüsselten Datenmenge, zumindest teilweise abhängig von dem Anzahlparameter; und
Entschlüsseln (S340) der verschlüsselten Datenmenge mittels des Geheimnisses (S).

3. Verfahren (20, 30) gemäß einem der Ansprüche 1 oder 2, bei dem der oder die Betriebsparameter (Par_B) einen Redundanzparameter (Par_Red) mit einer für eine Redundanzanzahl repräsentativen Information umfassen, und bei dem die Gesamtdatenpaketmenge ein oder mehrere von der Sendeeinrichtung (110) zumindest teilweise abhängig von dem Redundanzparameter erzeugte (S230) Redundanzdatenpakete umfasst, wobei die Anzahl der Redundanzdatenpakete der Redundanzanzahl entspricht, und wobei dem Zusammensetzen (S330) der Vielzahl von Teildatenpaketen zu einer Datenmenge die Schritte vorausgehen:
Identifizieren (S320) der Redundanzdatenpakete der Gesamtdatenpaketmenge zumindest teilweise abhängig von dem Redundanzparameters; und
Verwerfen (S320) der Redundanzdatenpakete.

4. Verfahren (20, 30) gemäß einem der Ansprüche 1 bis 3, bei dem zumindest ein erster Teil der Gesamtdatenpaketmenge auf zumindest einem ersten Kommunikationskanal (100) und zumindest ein zweiter Teil der Gesamtdatenpaketmenge auf zumindest einem zweiten Kommunikationskanal (101) gesendet werden, und bei dem zumindest der erste Teil der Gesamtdatenpaketmenge auf dem ersten Kommunikationskanal (100) und zumindest der zweite Teil der Gesamtdatenpaketmenge auf zumindest dem zweiten Kommunikationskanal (101) empfangen werden.

5. Verfahren (20, 30) gemäß Anspruch 4, bei dem die Betriebsparameter (Par_B) einen Kanalparameter mit einer Information über den ersten und den zweiten Kommunikationskanal (100, 101) umfassen, wobei das Senden und das Empfangen zumindest des ersten Teils der Gesamtdatenpaketmenge auf dem ersten Kommunikationskanal (100) und zumindest des zweiten Teils der Gesamtdatenpaketmenge auf zumindest dem zweiten Kommunikationskanal (101) zumindest teilweise abhängig von dem Kanalparameter ist,
wobei vorzugsweise der erste (100) und/oder der zweite Kommunikationskanal (101) als ein Funkkanal oder als eine mobile Datenverbindung ausgebildet sind.

6. Verfahren (20, 30) gemäß einem der Ansprüche 1 bis 5, bei dem das Bereitstellen des Geheimnisses (S) des Weiteren Folgendes umfasst:
Verschlüsseln des Geheimnisses (S) und Senden des verschlüsselten Geheimnisses (enc(S)); und/oder
Empfangen des verschlüsselten Geheimnisses (enc(S)) und Entschlüsseln des Geheimnisses (S);
und/oder
bei dem das Bereitstellen des oder der Betriebsparameter (Par_B) des Weiteren Folgendes umfasst:
Verschlüsseln der Betriebsparameter und Senden der verschlüsselten Betriebsparameter; und/oder
Empfangen der verschlüsselten Betriebsparameter und Entschlüsseln der Betriebsparameter.

7. Verfahren (20, 30) gemäß einem der Ansprüche 1 bis 6, wobei das Geheimnis (S) einen symmetrischen Schlüssel umfasst.

8. Verfahren (20, 30) gemäß einem der Ansprüche 1 bis 9, wobei das Geheimnis (S) einen privaten Schlüssel und/oder einen öffentlichen Schlüssel eines asymmetrischen Schlüsselpaares umfasst, wobei vorzugsweise zumindest der private Schlüssel in der Sendeeinrichtung (110) und zumindest der öffentliche Schlüssel in der Empfangseinrichtung (120) bereitgestellt werden.

9. Verfahren (20, 30) gemäß einem der Ansprüche 1 bis 8, bei dem die Betriebsparameter (Par_B) einen Fehlerkorrekturparameter mit einer Information über das Fehlerkorrekturverfahren umfassen , und bei dem das Zusammensetzen (S330) der Vielzahl von Teildatenpaketen das zumindest teilweise von dem Fehlerkorrekturparameter abhängige Anwenden eines Fehlerkorrekturverfahrens zur Erstellung der verschlüsselten Datenmenge umfasst.

10. Verfahren (20, 30) gemäß Anspruch 9, wobei das Fehlerkorrekturverfahren eine Cauchy-Reed-Solomon-Fehlerkorrektur ist.

11. Verfahren (20, 30) gemäß einem der Ansprüche 1 bis 10, bei dem der oder die in der Sendeeinrichtung (110) bereitgestellten Betriebsparameter (Par_B) und der oder die in der Empfangseinrichtung (120) bereitgestellten Betriebsparameter (Par_B) zumindest teilweise gleich sind.

12. Sendeeinrichtung (110) mit einer Kommunikationsschnittstelle (112), einem Prozessor (114), und einem computerlesbaren Datenträger (116), wobei in dem Datenträger (116) Instruktionen gespeichert sind, die bei Ausführung durch den Prozessor (114) die Durchführung des Verfahrens (20) gemäß einem der Ansprüche 1 bzw. 3 bis 11 bewirken.

13. Empfangseinrichtung (120) mit einer Kommunikationsschnittstelle (122), einem Prozessor (124) und einem computerlesbaren Datenträger (126), wobei in dem Datenträger (126) Instruktionen gespeichert sind, die bei Ausführung durch den Prozessor (124) die Durchführung des Verfahrens (30) gemäß einem der Ansprüche 2 bis 11 bewirken.

14. Übertragungssystem (10), umfassend
eine Sendeeinrichtung (110) gemäß Anspruch 12, und
eine Empfangseinrichtung (120) gemäß Anspruch 13.

15. Computerprogramm mit Programmanweisungen, einen Prozessor (113, 124) zur Ausführung und/oder Steuerung des Verfahrens (20, 30) gemäß einem der Ansprüche 1 bzw. 3 bis 11 oder gemäß einem der Ansprüche 2 bis 11 zu veranlassen, wenn das Computerprogramm auf dem Prozessor (114, 124) ausgeführt wird, das vorzugsweise auf einem computerlesbaren Datenträger gespeichert ist.
